# DEMANDE DE BREVET EUROPEEN

(11) **EP 4 745 517 A1**
(43) Date de publication de la demande: **20.05.2026**
(21) Numéro de dépôt: 25215238.4
(22) Date de dépôt: 12.11.2025
(51) Int. Cl.: G01B 11/02, G01B 11/245

(54) **METHODE DE MESURE DIMENSIONNELLE D'UNE PLAQUE METALLIQUE**

(30) Priorité: 13.11.2024 FR 2412371
(71) Demandeur: Aluminium Dunkerque, 59279 Loon-Plage (FR); Catry Topographie, 59650 Villeneuve-d'Ascq (FR); Setis, 38000 Grenoble (FR)
(72) Inventeur: ARCHAMBEAU, Gaël, 38400 Saint Martin d'Hères (FR); KELLER, Alexis, 59240 Dunkerque (FR); JACOB, Nicolas, 59240 Dunkerque (FR); CATRY, Grégoire, 59262 Sainghin en Mélantois (FR); POPIEUL, Florian, 59492 Hoymille (FR)
(74) Mandataire: Novagraaf Technologies

(57) **Abrégé**

La présente invention se rapporte au domaine du domaine du contrôle qualité dans l'industrie métallurgique, et plus précisément à une méthode de mesure dimensionnelle de plaque métallique. L'invention se rapporte à une méthode de mesure dimensionnelle d'une plaque métallique comprenant les étapes suivantes : mise en place de la plaque métallique dans une zone dite « zone d'acquisition » définie par la portée d'un ensemble de scanners ; mise en place d'éléments de localisation dans la zone d'acquisition ; réalisation d'un nuage de points lasers en simultané sur l'ensemble des faces de la plaque métallique au moyen de l'ensemble de scanners ; génération d'un rapport de mesures par acquisition et traitement des données du nuage de points via un logiciel de métrologie en utilisant le processus suivant i) acquisition de nuages de points au moyen de chaque scanner de l'ensemble de scanners ; ii) exportation des nuages de points acquis par chaque scanner sur une interface informatique et recalage des nuages de points via l'interface informatique pour l'obtention d'un nuage de point global ; iii) importation du nuage de points global dans le logiciel de métrologie ; iv) détermination d'au moins une dimension de plaque par traitement du nuage de point global via le logiciel de métrologie et obtention d'un rapport de mesures ; éventuellement, comparaison de ce rapport de mesures avec un rapport de mesures standard présentant au moins une dimension de plaque cible. La présente invention est utile, par exemple, pour déterminer rapidement et efficacement les dimensions d'une plaque métallique, par exemple d'une plaque en aluminium comprenant ou non des déformations.

## Description

### Domaine technique de l'invention

La présente invention se rapporte au domaine du contrôle qualité dans l'industrie métallurgique, et plus précisément à une méthode de mesure dimensionnelle d'une plaque métallique.

La présente invention est utile, par exemple, pour déterminer rapidement et efficacement les dimensions d'une plaque métallique, par exemple d'une plaque en aluminium comprenant ou non des déformations.

### Art antérieur

La mesure dimensionnelle est une étape systématique dans le cadre de la production de plaque métallique. Cela permet notamment d'identifier les plaques ayant des dimensions hors tolérances ou cahier des charges, c'est-à-dire des plaques qui auront un scalpage trop important et qui seront de ce fait trop courte ou trop fine pour les applications souhaitées.

La réalisation de mesure dimensionnelle est généralement la technique utilisée pour dimensionner des plaques métalliques. Le contrôle manuel est effectué par un opérateur à l'aide d'un mètre ruban, d'une règle, d'une équerre et/ou de tout autre dispositif de mesure de de ce type. Cependant, cette technique est source de nombreuses difficultés dont les trois principales restent les erreurs humaines lors de la prise de mesures, le manque de fiabilité dans la répétabilité des mesures, le temps des mesures, et le temps d'analyse des mesures récoltées.

Afin d'éviter de tel écueils, plusieurs solutions ont été développées dans l'art antérieur.

Il a été envisagé d'utiliser un profilomètre qui est un instrument utilisé pour mesurer le relief d'une surface, notamment dans le but d'en évaluer la rugosité ou la micro-géométrie. Cet appareil utilise la télédétection par laser LIDAR (« laser imaging detection and ranging ») qui est une technique de mesure à distance fondée sur l'analyse des propriétés d'un faisceau de lumière renvoyé vers son émetteur. Malheureusement, cela ne permet pas pour autant d'obtenir de manière fiable toutes les dimensions d'une plaque. En effet, la mise en œuvre d'une technique de mesure dimensionnelle d'une plaque métallique via un profilomètre implique le déplacement de ladite plaque ou dudit profilomètre pour obtenir tous les profils de la plaque. Or, un tel déplacement génère des vibrations et/ou des oscillations génératrices d'erreurs de mesure.

Une autre voie envisagée comprend l'utilisation de dispositifs à lumière structurée. Ces dispositifs comprennent un projecteur projetant un motif lumineux, sur un objet, et une caméra enregistrant les éventuelles déformations du motif lumineux projeter sur l'objet. Les données récoltées, notamment les distances entre les différents points du motif, sont ensuite analysées afin de générer un modèle 3D. Malheureusement, cela n'est pas adapté au secteur de la métallurgie en ce que cette technologie ne permet pas de mesurer d'objets volumineux, tels que peuvent l'être des plaques métalliques. De plus, cette technologie est sensible aux variations lumineuses, ce qui peut influencer négativement la qualité et la fiabilité des mesures.

Il existe également la publication de Zhang Chunwei et al. qui décrit une méthode de calcul de l'épaisseur d'une plaque à partir de deux scanners (Zhang Chunwei et al. « Efficient thickness calculation for a plate based on space gridding and direction alignment", 2023 2nd international conference on optical imaging and measurement (ICOIM), IEEE, 20 octobre 2023, pages 182-185). Cependant, cette méthode ne génère des nuages de points que pour deux des faces de la plaque et ne permet donc pas d'obtenir de manière fiable toutes les dimensions d'une plaque. De plus, elle présente des résultats pour de très petites plaque, ce qui, comme susmentionné, n'est pas adapté au secteur de la métallurgie.

Ainsi, à ce jour, aucune méthode de mesure dimensionnelle d'une plaque métallique satisfaisante en termes de fiabilité ou de répétabilité n'a été proposée. Il existe donc un réel besoin de trouver une méthode rapide, et de ce fait économiquement intéressante, et précise, ne présentant pas les inconvénients de l'art antérieur.

### Exposé de l'invention

La présente invention a précisément pour but de répondre à ces besoins et résoudre les problèmes et inconvénients de l'art antérieur en fournissant une méthode de mesure dimensionnelle d'une plaque métallique. La méthode de l'invention permet avantageusement de supprimer les erreurs de saisie par un opérateur, d'obtenir une répétabilité des mesures effectuées et d'améliorer la rapidité de la mesure dimensionnelle tout en archivant automatiquement les informations récoltées. La méthode selon l'invention permet en outre de détecter efficacement toutes les plaques métalliques ne répondant pas à un cahier des charges précis, c'est-à-dire les plaques métalliques n'ayant pas les dimensions attendues. La méthode selon l'invention étant facile à mettre en œuvre et rapide, elle est en outre très intéressante économiquement.

Un premier objet de la présente invention est une méthode de mesure dimensionnelle d'une plaque métallique comprenant les étapes suivantes :
- mise en place de la plaque métallique dans une zone dite « zone d'acquisition » définie par la portée d'un ensemble de scanners ;
- mise en place d'un élément de localisation dans la zone d'acquisition ;
- réalisation d'un nuage de points lasers en simultané sur l'ensemble des faces de la plaque métallique au moyen de l'ensemble de scanners ;
- génération d'un rapport de mesures par acquisition et traitement des données du nuage de points via un logiciel de métrologie en utilisant le processus suivant :
   i) acquisition de nuages de points au moyen de chaque scanner de l'ensemble de scanners ;
   ii) exportation des nuages de points acquis par chaque scanner sur une interface informatique et recalage des nuages de points via l'interface informatique pour l'obtention d'un nuage de point global ;
   iii) importation du nuage de points global dans le logiciel de métrologie ;
   iv) détermination d'au moins une dimension de plaque par traitement du nuage de point global via le logiciel de métrologie et obtention d'un rapport de mesures ;
- éventuellement, comparaison de ce rapport de mesures avec un rapport de mesures standard présentant au moins une dimension de plaque cible.

Par « plaque métallique », on entend une plaque comprenant un métal ou un alliage, c'est-à-dire un mélange de métaux. Par exemple, la plaque peut comprendre au moins un métal choisi parmi la fonte, le fer, l'acier, le cuivre, le nickel, l'aluminium, le plomb, le zinc, l'étain, le tungstène, le molybdène, le tantale, le magnésium, le cobalt, le bismuth, le cadmium, le titane, le zirconium, l'antimoine, le manganèse, le béryllium, le chrome, le germanium, le vanadium, le gallium, l'hafnium, l'indium, le niobium, le rhénium, le thallium, de préférence au moins de l'aluminium, et de manière encore préférée la plaque peut être une plaque d'aluminium.

Avantageusement, la plaque métallique peut avoir une longueur allant de 1 500 à 10 000 mm, de préférence de 2 000 à 9 500 mm et de manière encore préféré de 2200 à 9200 mm.

Avantageusement, la plaque métallique peut avoir une largeur allant de 900 à 3 000 mm, de préférence de 900 à 2 750 mm et de manière encore préféré de 950 mm à 2500 mm.

Avantageusement, la plaque métallique peut avoir une épaisseur allant de 100 à 800 mm, de préférence de 200 à 700 mm et de manière encore préféré de 370 à 630 mm.

Par « scanner », on entend un dispositif apte à analyser un objet et/ou un environnement proche pour recueillir des informations sur la forme et éventuellement sur l'apparence de ceux-ci. Par exemple, un scanner peut être choisi parmi un scanner de référence P30, commercialisé par LEICA Geosystems SAS domicilié en France, un scanner de référence P40, commercialisé par LEICA Geosystems SAS domicilié en France, un scanner de référence P50, commercialisé par LEICA Geosystems SAS (France), un scanner RTC 360 commercialisé par LEICA Geosystems SAS (France) ou tout autre scanner 3D dit « terrestre » ou « d'environnement » connu de l'homme du métier. Le scanner de référence RTC 360 étant fonctionnel mais pouvant induire une perte de précision, le scanner peut être choisi, de préférence, parmi un scanner de référence P30, P40, P50 ou tout autre scanner 3D dit « terrestre » ou « d'environnement » connu de l'homme du métier.

Par « zone d'acquisition », on entend une zone dans laquelle la plaque métallique entre dans la portée de l'ensemble de scanners, c'est-à-dire une zone pour laquelle l'ensemble de scanners peuvent simultanément détecter la plaque métallique. La zone d'acquisition peut comprendre un axe vertical et un axe horizontal.

Par « élément de localisation », on entend un élément permettant de repérer par des mesures 3D précises l'emplacement exact d'un point de l'espace donné. Ainsi, l'élément de localisation est une pièce simple, par exemple de forme sphérique, permettant de replacer les différents points entre eux. Ces points, qui forment ce que l'on appelle un nuage de points, peuvent être transmis à un scanner. Ce scanner peut ainsi mesurer la densité de points à 10m, générer une photo, en couleur ou non et/ou dimensionner une fenêtre d'acquisition.

L'élément de localisation peut être choisi parmi une sphère, une cible papier, un damier, une cible plane, et une surface de référence, de préférence une sphère, et de manières encore préféré une sphère blanche.

Avantageusement, plusieurs éléments de localisation peuvent être mis en place dans la zone d'acquisition. De préférence, le nombre d'éléments de localisation est compris de 4 à 6, et de manière préféré le nombre d'éléments de localisation est de 6.

Avantageusement, s'il y a plusieurs éléments de localisation, alors les éléments de localisation peuvent être identiques ou différents.

Avantageusement, l'élément de localisation peut être positionné de façon arbitraire dans la zone d'acquisition. De préférence, si le nombre d'éléments de localisation est compris de 4 à 6, alors les éléments de localisation peuvent être positionnés à différentes hauteurs et avec une répartition circulaire à partir du centre de la zone d'acquisition. De manière préférée, si le nombre d'éléments de localisation est compris de 4 à 6, alors les éléments de localisation peuvent être positionnés de manière à ce que chaque scanner soit en mesure de détecter au moins 4 éléments de localisation détectés par un autre scanner.

Par « rapport de mesure », on entend un fichier ou un document comprenant tout ou partie des mesures obtenues par la méthode selon l'invention.

Par « logiciel de métrologie », on entend un logiciel permettant à un utilisateur de créer et/ou exécuter une routine de mesure. Par exemple, le logiciel de métrologie peut être choisi parmi Spatial Analyzer (marque de commerce), commercialisé par Hexagon metrology SAS domicilié à Saint Aubin, Polyworks (marque de commerce), commercialisé par Polyworks Europa (France), et Metrolog X4 (marque de commerce) commercialisé par Metrologic Group France.

Par « interface informatique », on entend un programme informatique permettant l'interaction entre un système informatique et son utilisateur, par exemple entre un scanner et son utilisateur. Avantageusement, l'interface informatique permet de transmettre les paramètres de mesure à l'ensemble de scanners, lancer les mesures, récupérer les coordonnées XYZ des nuages de points de chacun de l'ensemble de scanners, de calculer les paramètres de recalage des nuages de point, de générer un nuage de point global et d'importer ledit nuage de point global dans le logiciel de métrologie.

Par « acquisition du nuage de points », on entend la collecte des informations relatives à chacun des points constituants le nuage. L'acquisition d'un point peut être réalisée par un scanner couvrant au moins une zone d'une plaque métallique d'un point de vue surfacique. Ainsi, le scanner positionne un point dans l'espace correspondant à une surface de la plaque métallique et définie ce point par rapport aux autres points générés.

Par « recalage », on entend un processus permettant de grouper les nuages de points des différents scanners afin de former un seul nuage de points, dit nuage de point global, qui pourra être analysé par la suite.

Par « exportation », on entend un processus de transfert et/ou de sauvegarde des données issues de l'ensemble de scanners vers une interface informatique.

Par « nuage de points », on entend une représentation numérique 3D d'une plaque métallique qui se compose de plusieurs points placés dans un repère de coordonnées x, y et z.

Par « nuage de points global » on entend un nuage de points résultant du regroupement d'au moins deux nuages de points, acquis par au moins deux scanners, via l'interface informatique.

Par « importation », on entend un processus de transfert et/ou de sauvegarde des données issues d'une interface informatique vers un logiciel.

Par « dimension », on entend une ou plusieurs des mesures de la plaque métallique choisies parmi la longueur, la largeur, l'épaisseur, les flèches longitudinales, les flèches latérales, les flèches transversales, l'équerrage.

Par « flèche longitudinale », on entend une flèche d'une face de la plaque selon une section dans le plan perpendiculaire au plan de pose de la plaque et dans la direction de la longueur de ladite plaque.

Par « flèches latérale », on entend une flèche d'une face de la plaque selon une section dans le plan parallèle au plan de pose de la plaque et dans la direction de longueur de ladite plaque.

Par « flèches transversale », on entend une flèche d'une face de la plaque selon une section dans le plan perpendiculaire au plan de pose de la plaque et dans la direction de la diagonale de ladite plaque.

Par « équerrage », on entend la vérification de la perpendicularité d'un des angles entre deux faces d'une plaque métallique.

Avantageusement, dans la méthode selon la présente invention, l'étape de mise en place de la plaque métallique peut être précédée d'une ou peut comprendre une étape d'élimination de copeau de découpage.

Par « copeau de découpage », on entend un éclat ou un fragment métallique sur l'une des faces d'une plaque métallique. Le copeau peut être issu d'une étape de découpage ayant permis d'obtenir une plaque métallique à des dimensions souhaitées.

Par « étape d'élimination », on entend une étape de retrait de tout ou partie des copeaux de découpage. Avantageusement, l'étape d'élimination de copeaux de découpage peut être mise en œuvre par un système de soufflerie automatique, c'est-à-dire un système équipé de buse permettant de chasser les coupeaux de découpage, ou une simple soufflette utilisée par un opérateur.

Avantageusement, dans la méthode selon la présente invention, l'étape de mise en place de la plaque métallique peut être précédée d'une ou peut comprendre une étape de séchage de la plaque.

Par « étape de séchage », on entend l'élimination de tout ou partie de l'eau comprise sur la surface d'une plaque métallique.

Avantageusement, l'étape de séchage peut être mise en œuvre par un système de soufflerie automatique c'est-à-dire un système est équipé de buses, ou une simple soufflette utilisée par un opérateur.

Avantageusement, la plaque métallique peut être positionnée sur un support.

Par « support », on entend un ou plusieurs objets permettant à la plaque métallique de ne pas être en contact direct avec le sol, c'est-à-dire d'être surélevé par rapport au sol. Par exemple, le support peut comprendre des plots de pose, des trépieds, une structure métallique, un bâti d'une machine existante.

Avantageusement, l'ensemble de scanners peut comprendre un scanner placé de manière à surplomber la plaque métallique, de préférence des scanners placés de manière à surplomber la plaque métallique.

Avantageusement, l'ensemble de scanners comprend au moins deux scanners, de préférence au moins quatre scanners.

Avantageusement, les au moins quatre scanners peuvent être placés de manière à former un espace entourant la plaque métallique, de préférence un rectangle dans lequel se situe la plaque métallique. De préférence, les au moins quatre scanners peuvent être positionné selon une configuration comprenant deux scanners situés à une hauteur inférieure à la hauteur de la plaque métallique et deux scanners situés à une hauteur supérieure à la hauteur de la plaque métallique.

Le ou les scanners placés sous la plaque métallique permettent de mesurer la face de la plaque métallique orientée vers de sol, de manière à mesurer l'épaisseur de la plaque métallique lorsque cette dernière présente une torsion ou une irrégularité.

Avantageusement, l'ensemble de scanners peut en outre comprendre au moins un scanner supplémentaire placé sous la plaque métallique, de préférence deux scanners supplémentaires. Par exemple, les scanners supplémentaires peuvent être indépendamment placés à une hauteur inférieure à la hauteur de la plaque métallique ou à une hauteur supérieure à la hauteur de la plaque métallique.

Par « torsion » ou « irrégularité », on entend une déformation de la plaque métallique, résultant en la non-planéité de la plaque.

Avantageusement, le procédé de l'invention peut comprendre les étapes supplémentaires de
- mise en place d'une caméra à l'extérieur de la zone d'acquisition ;
- acquisition d'au moins une photographie de la plaque métallique au moyen de la caméra ;
- intégration de la, au moins une, photographie dans le rapport de mesures.

Avantageusement, l'étape de mise en place de la plaque dans la zone d'acquisition peut comprendre le positionnement de la plaque dans la zone d'acquisition avec ou sans un angle d'inclinaison de la plaque par rapport à l'axe horizontal de la zone d'acquisition. Par exemple, l'angle d'inclinaison peut être supérieur à 0° et peut être inférieur à 180 °, de préférence inférieur à 90°, de manière préférée inférieur à 45°, de manière encore préférée inférieur à 10° et de manière encore plus préférée inférieur à 2,5 °. Ce positionnement a pour but d'optimiser l'incertitude de mesure des scanners par la limitation de l'angle d'incidence de la mesure et d'optimiser le temps d'acquisition.

Avantageusement, l'étape d'analyse peut permettre de relever une ou plusieurs des mesures de la plaque métallique choisies parmi la longueur, la largeur, l'épaisseur, les flèches longitudinales, les flèches latérales, les flèches transversales, l'équerrage.

### Brève description des figures

La figure 1 représente schématiquement une plaque métallique (PM) sur laquelle est représenté à titre illustratif une mesure de longueur (LO), de largeur (LA), d'épaisseur (EP), de flèche longitudinale (FLO), de flèche latérale (FLA), de flèche transversale (FTR) et d'équerrage (EQ).
La figure 2 représente schématiquement une vue de dessus d'une zone d'acquisition (ZA) délimitée par quatre scanners (SC) comprenant une plaque métallique (PM) dans laquelle le positionnement de la plaque dans la zone d'acquisition comprend un angle d'inclinaison de la plaque de 2,5 ° par rapport à l'axe horizontal (AH) de la zone d'acquisition.
La figure 3 représente schématiquement une vue de profil d'une plaque métallique (PM) comprenant une torsion sur deux plots de pose (PP) pour laquelle deux scanners (SC) sont placés sous ladite plaque métallique de manière à ce que les mesures tiennent compte de ladite déformation.
La figure 4 représente schématiquement une plaque métallique (PM) sur laquelle est représenté à titre illustratif différentes mesures de longueur (LO1 à LO5) pour une même face de ladite plaque métallique.

### EXEMPLES

D'autres avantages, buts et caractéristiques particuliers de la présente invention ressortiront des exemples qui suivent, présentés dans un but illustratif et non limitatif, à la lumière des figures annexées.

### Exemple 1 : Exemple de mesure dimensionnelle d'une plaque métallique dans un environnement intérieur

Cet exemple décrit une mesure dimensionnelle d'une plaque métallique (PM) dans un environnement intérieur, c'est-à-dire soumis à une intensité lumineuse inférieure à 1 000 lux. En effet, l'intensité lumineuse dans le cadre de cet exemple est de 513 lux.

La plaque métallique est en aluminium (commercialisée par la société Aluminium Dunkerque domiciliée en France.

Une zone d'acquisition (ZA) est délimitée en positionnant quatre scanners (SC) de manière à former un quadrilatère de 12915 mm x 6350 mm.

Les scanners sont des scanners P30 (commercialisés par la société LEICA, LEICA Geosystems SAS domicilié en France.

La plaque métallique (PM) est positionnée sur deux plots de pose (PP) de manière que le centre de la plaque correspond au centre des deux plots de pose avec une marge d'erreur de plus ou moins 20 mm. Il est à noter que la marge d'erreur n'a pas d'impact réel sur les mesures tant que la plaque métallique reste dans la zone de mesure. Les deux plots de pose (PP) sont positionnés au centre de la zone d'acquisition.

Six sphères blanches de référence 109561, commercialisées par la société NESTLE, sont placées dans la zone d'acquisition pour permettre le calibrage des scanners. Les sphères sont positionnées dans la zone d'acquisition afin que chaque scanner relève les données relatives aux six sphères.

Un opérateur utilise l'interface informatique pour lancer les mesures et obtenir un nuage de points de manière simultané sur l'ensemble des faces de la plaque métallique.

L'interface informatique exporte les nuages de points enregistrés par les scanners et les recale, de manière à obtenir un nuage de point global comprenant des données sur l'ensemble des faces de la plaque métallique.

En effet, les scanners mesurent la plaque et les sphères. Les différentes coordonnées créées grâce aux scanners sont envoyées dans l'interface informatique SCAN Press (commercialisé par la société SETIS Group domiciliée à Grenobles France) via un câble RJ45. Cette interface informatique permet de générer les différents nuages de points et de les recaler ensemble grâce aux coordonnées reçus.

Les données recalées de l'interface informatique et le nuage de point global sont envoyés sur le logiciel de métrologie Spatial Analyzer (commercialisées par la société Hexagon France domicilié à Saint Priest : il s'agit de l'étape d'importation du nuage de point global.

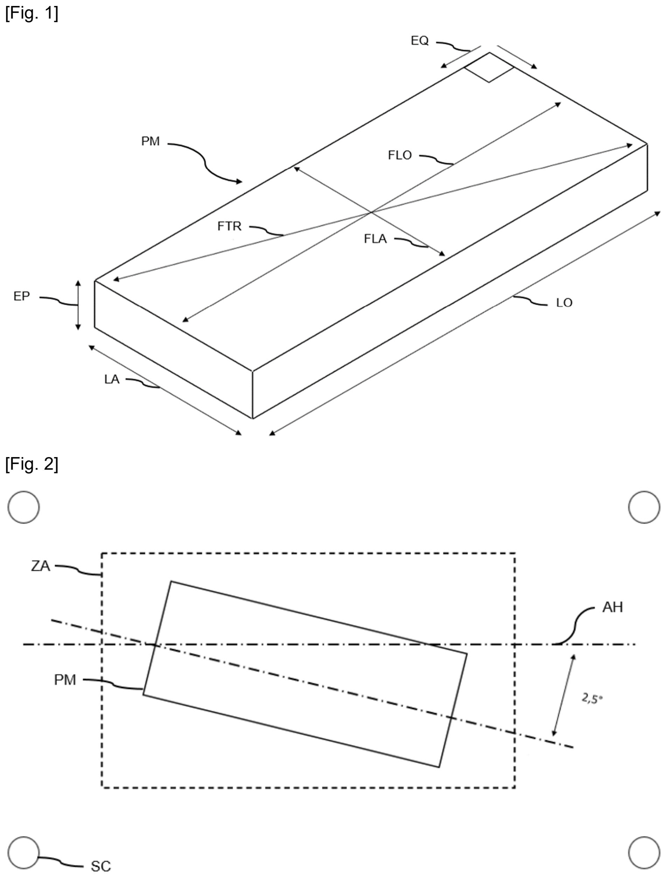

Un rapport de mesures est généré par le logiciel. Ce rapport comprend la longueur (LO), la largeur (LA), l'épaisseur (EP), les flèches longitudinales (FLO), les flèches latérales (FLA), les flèches transversales (FTR), et l'équerrage (EQ) de la plaque métallique. Il s'agit des différentes mesures permettant de dimensionner la plaque métallique, comme représenté sur la figure 1.

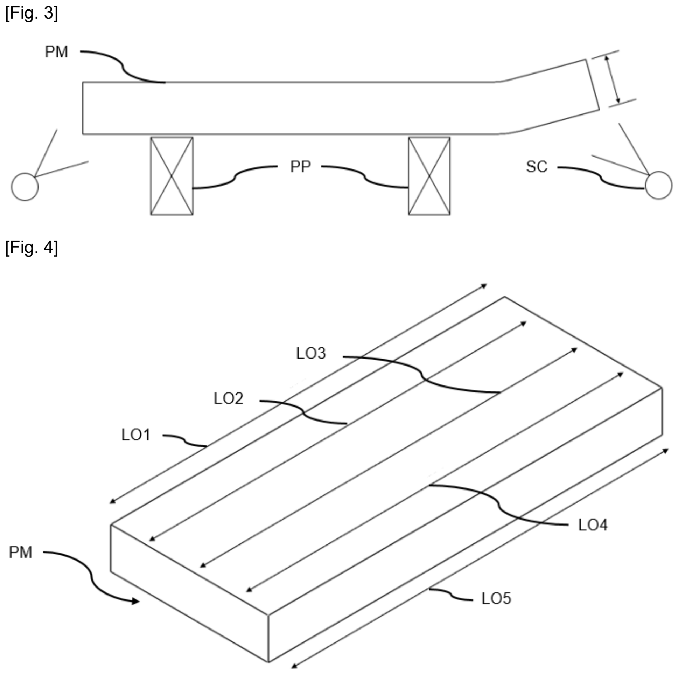

La mesure de longueur est issue de la moyenne des mesures de longueur en tout point de la plaque métallique, comme représenté sur la figure 4. Il en est de même pour les autres types de mesures.

**Tableau 1 : Ensemble de mesure d'une place métallique dans un environnement intérieur.**

| [Table 1] | | | | | | | | |
|---|---|---|---|---|---|---|---|---|
| Mesures | 1 | 2 | 3 | 4 | 5 | Moyenne | Maximum | Minimum |
| Longueur (mm) | 4997 | 4995 | 4994 | 4993 | 4991 | 4994 | 4997 | 4991 |
| Largeur (mm) | 1190 | 1188 | 1188 | 1188 | 1190 | 1188.3 | 1190.2 | 1185.6 |
| Epaisseur (mm) | 525 | 521 | 520 | 520 | 522 | 522.8 | 525.9 | 519.1 |
| Fleche longitudinale (mm) | 3 | 6 | 4 | | | 4,3 | 6 | 3 |
| Fleche latérale (mm) | 2 | 2 | 5 | | | 3 | 5 | 2 |
| Fleche transversale (mm) | 3 | 3 | | | | 3 | 3 | 3 |
| Equerrage (°) | 89,73 | 90,29 | 89,95 | 90,02 | | 89,50 | 80,29 | 89,73 |

Un premier test répétabilité, dit « essai de répétabilité fixe », a été réalisé pour cet exemple. Pour cela, la même procédure a été mise en œuvre plus de 10 fois sans déplacer la plaque métallique.

Un second test répétabilité, dit « essai de répétabilité dynamique », a été réalisé pour cet exemple. Pour cela, la même procédure a été mise en œuvre plus de 10 fois en déplaçant la plaque métallique entre chaque procédure.

A la suite des essais de répétabilités fixe et dynamique, l'écart maximum constaté entre les différentes mesures est inférieur à 2 mm. La zone d'acquisition peut donc être adapté suivant les besoins (configuration de l'environnement dédié à la réalisation des mesures).

### Exemple 2 : Exemple de mesure dimensionnelle d'une plaque métallique dans un environnement extérieur

Cet exemple décrit une mesure dimensionnelle d'une plaque métallique dans une environnement extérieur, c'est-à-dire soumis à une intensité lumineuse supérieure à 1 000 lux.

Il est à noter que les plaques métalliques des exemples 1 et 2 sont toutes deux des plaques en aluminium commercialisée par la société Aluminium Dunkerque. Cependant, elles diffèrent en ce qu'il ne s'agit pas de la même plaque en tant que telle. En effet, les dimensions de la plaque métallique utilisée dans le cadre de l'exemple 2 sont différentes de celle de la plaque métallique de l'exemple 1 car chaque plaque produite comprend de légères différences.

Ainsi, l'objectif de l'exemple 2 est de démontrer que le procédé de l'invention fonctionne dans un environnement extérieur et non d'obtenir des mesures démontrant que les dimensions de la plaque de l'exemple 2 sont identiques à celles de l'exemple 1.

La même méthode que celle de l'exemple 1 est mise en œuvre dans le présent exemple à l'extérieur d'un bâtiment, à la lumière du jour, journée ensoleillée.

**Tableau 2 : Ensemble de mesure d'une place métallique dans un environnement extérieur.**

| [Table 2] | | | | | | | | |
|---|---|---|---|---|---|---|---|---|
| Mesures | 1 | 2 | 3 | 4 | 5 | Moyenne | Maximum | Minimum |
| Longueur (mm) | 4025 | 4022 | 4021 | 4019 | 4017 | 4021 | 4025 | 4017 |
| Largeur (mm) | 1190 | 1188 | 1191 | 1190 | 1190 | 1189 | 1191 | 1188 |
| Epaisseur (mm) | 598 | 597 | 602 | 601 | 601 | 600 | 602 | 597 |
| Fleche longitudinale (mm) | 4 | 8 | 6 | | | 6 | 8 | 6 |
| Fleche latérale (mm) | 5 | 2 | 4 | | | 3,6 | 5 | 2 |
| Fleche transversale (mm) | 7 | 6 | | | | 6,5 | 7 | 6 |
| Equerrage (°) | 90,02 | 90,07 | 89,71 | 89,66 | | 89.87 | 90,07 | 89,66 |

Le procédé de l'invention mis en œuvre dans l'exemple 2 permet de mesurer les dimensions d'une plaque métallique sans que l'intensité lumineuse n'impacte la réalisation des mesures. Ainsi, cela souligne que la méthode selon l'invention n'est pas influencée par des variations lumineuses.

Le procédé de l'invention permet en un temps très court de dimensionner entièrement une plaque métallique, tout en supprimant les erreurs humaines d'un opérateur. De plus, le procédé selon l'invention est très intéressant économiquement.

## Revendications

1. Méthode de mesure dimensionnelle d'une plaque métallique (PM) comprenant les étapes suivantes :
- mise en place de la plaque métallique (PM) dans une zone dite « zone d'acquisition » (ZA) définie par la portée d'un ensemble de scanners (SC) ;
- mise en place d'un élément de localisation dans la zone d'acquisition ;
- réalisation d'un nuage de points lasers en simultané sur l'ensemble des faces de la plaque métallique (PM) au moyen de l'ensemble de scanners (SC) ;
- génération d'un rapport de mesures par acquisition et traitement des données du nuage de points via un logiciel de métrologie en utilisant le processus suivant :
i) acquisition de nuages de points au moyen de chaque scanner (SC) de l'ensemble de scanners (SC) ;
ii) exportation des nuages de points acquis par chaque scanner (SC) sur une interface informatique et recalage des nuages de points via l'interface informatique pour l'obtention d'un nuage de point global ;
iii) importation du nuage de points global dans le logiciel de métrologie ;
iv) détermination d'au moins une dimension de plaque par traitement du nuage de point global via le logiciel de métrologie et obtention d'un rapport de mesures ;
- éventuellement, comparaison de ce rapport de mesures avec un rapport de mesures standard présentant au moins une dimension de plaque (PM).

2. Méthode selon la revendication 1, dans laquelle l'élément de localisation est choisi parmi une sphère, une cible papier, un damier, une cible plane et une surface de référence.

3. Méthode selon la revendication 1 ou 2, dans laquelle l'étape de mise en place de la plaque métallique (PM) est précédée d'une ou comprend une étape d'élimination des copeaux de découpage

4. Méthode selon l'une quelconque des revendications 1 à 3, dans laquelle l'étape de mise en place de la plaque métallique (PM) est précédée d'une ou comprend une étape de séchage de la plaque (PM).

5. Méthode selon l'une quelconque des revendications 1 à 4, dans laquelle l'ensemble de scanners (SC) comprend en outre au moins un scanner (SC) supplémentaire placé sous la plaque métallique (PM).

6. Méthode selon l'une quelconque des revendications 1 à 5, dans laquelle l'étape de mise en place de la plaque (PM) dans la zone d'acquisition (ZA) comprend le positionnement de la plaque (PM) dans la zone d'acquisition (ZA) avec un angle d'inclinaison de la plaque (PM) par rapport à l'axe horizontal (AH) de la zone d'acquisition (ZA) supérieur à 0° et inférieur à 180 °.

7. Méthode selon l'une quelconque des revendications précédentes, dans laquelle l'étape de détermination d'au moins une dimension de plaque (PM) permet de relever une ou plusieurs des mesures de la plaque métallique choisies parmi la longueur (LO), la largeur (LA), l'épaisseur (EP), les flèches longitudinales (FLO), les flèches latérales (FLA), les flèches transversales (FTR), l'équerrage (EQ).

8. Méthode selon l'une quelconque des revendications précédentes, dans laquelle la plaque métallique (PM) a une longueur (LO) allant de 1 500 à 10 000 mm.

9. Méthode selon l'une quelconque des revendications précédentes, dans laquelle la plaque métallique (PM) a une largeur (LA) allant de 900 à 3 000 mm.

10. Méthode selon l'une quelconque des revendications précédentes, dans laquelle la plaque métallique (PM) a une épaisseur (EP) allant de 100 à 800 mm.

11. Méthode selon l'une quelconque des revendications précédentes, dans laquelle la plaque métallique (PM) est une plaque d'aluminium.
